# EUROPÄISCHE PATENTSCHRIFT

(11) **EP 1 496 020 B1**
(45) Veröffentlichungstag und Bekanntmachung des Hinweises auf die Patenterteilung: **11.01.2006**
(21) Anmeldenummer: 04012537.9
(22) Anmeldetag: 27.05.2004
(51) Int. Cl.: C03B 5/167, C03B 5/43, C03B 37/095

(54) **Keramik-Molybdän-Verbundmaterialien für den Glaskontakt**
Ceramic-lined molybdenum material for use in contact with molten glass
Matériau composé molydbdène-céramique pour contact avec du verre liquide

(30) Priorität: 30.06.2003 DE 10329277
(43) Veröffentlichungstag der Anmeldung: 12.01.2005
(73) Patentinhaber: Schott AG, 55122 Mainz (DE)
(72) Erfinder: Postrach, Stefan, Dr., 55126 Mainz (DE)
(74) Vertreter: Fuchs Mehler Weiss & Fritzsche

(56) Entgegenhaltungen:
- DD-A- 202 899
- US-A- 4 668 262
- US-A- 4 819 247

## Beschreibung

Die Erfindung betrifft ein Verbundmaterial für Glaskontaktanwendungen mit einer Molybdänschicht und einer Feuerfest-Schicht. Die Erfindung bezieht sich auch auf Verwendungen und ein Verfahren zur Herstellung solcher Verbundmaterialien.

Derartige Verbundmaterialien werden insbesondere für die Auskleidung von Schmelzwannen eingesetzt.

Dabei ist die im Glaskontakt stehende Schicht des Verbundmaterials aus Molybdän aufgebaut. Das Refraktärmetall Molybdän ist für Anwendungen bei der Glasherstellung bekannt und wird beispielsweise für Glasschmeizelektroden, Befestigungsmittel, Rührer, Heizelemente, Schmelzcontainer, Ein- und Auslassrohre sowie Ziehhilfsmittel verwendet. Molybdän zeichnet sich durch einen hohen Schmelzpunkt von 2620° C, einen niedrigen Wärmeausdehnungskoeffizienten, eine hohe Wärmeleitfähigkeit sowie durch eine gute Benetzbarkeit für Glasschmelzen aus. Femer besitzt das Molybdän gegenüber vielen schmelzflüssigen Gläsern eine hervorragende Stabilität und verursacht keine Fehler, wie z. B. Verfärbungen. Es ist dabei deutlich günstiger als die in vielen Fällen als Glaskontaktmaterialien eingesetzten Edelmetalle, z. B. Platin.

Die Anforderungen an die Glaskontaktmaterialien sind in der letzten Zeit deutlich angestiegen. Die Gründe dafür liegen in den höheren Prozesstemperaturen, in den angewachsenen Schmelzratenkapazitäten und den höheren Anforderungen an die Glasqualitäten. Nicht zuletzt werden auch immer längere Ofenstandzeiten angestrebt. Höhere Temperaturen und zunehmende Schmelzraten bewirken einen stärkeren Konvektionsstrom in den Schmelzwannen, der sehr stark den Verschleiß der Wannenauskleidung beeinflusst, wobei der Verschleiß im Glaskontaktbereich nicht homogen ist. Es ist daher notwendig, die kritischen Bereiche, die einer besonders starken Glaskorrosion ausgesetzt sind, aus möglichst unempfindlichen Materialien aufzubauen.

Aufgrund der erhöhten Anforderungen an die Glaskontaktmaterialien versucht man verstärkt die ausgezeichneten Eigenschaften des Molybdäns auszunutzen. In vielen Fällen verhindert allerdings eine kritische Eigenschaft von Molybdän, nämlich die sehr hohe Oxidationsempfindlichkeit, dessen Einsatz. Die Oxidation beginnt in sauerstoffhaltiger Atmosphäre bei etwa 400° C und nimmt mit steigender Temperatur deutlich zu, was sich durch einen zunehmenden Gewichtsverlust bemerkbar macht.

Der Oxidationsschutz von Molybdän spielt daher eine zentrale Rolle beim Einsatz dieses Materials bei hohen Temperaturen, wie sie bei der Glaserzeugung und - bearbeitung üblich sind. Es gibt verschiedene technische Lösungsmöglichkeiten für dieses Problem. Beschrieben werden beispielsweise spezielle Beschichtungen in DD-202899A, JP 621 71 927 A und US 4,668,262 A. Von der Fa. Plansee ist das Material Sibor® bekannt, das eine sehr harte und dichte Schicht darstellt, die bei Oxidation eine Diffusionssperre gegen das Grundmaterial darstellt. Nachteil für alle diese Beschichtungsvarianten ist, dass der Oxidationsschutz zeitlich begrenzt ist, z. B. bei Sibor® auf die Dauer des Tempervorgangs, so dass die dem Glas abgewandte Seite anderweitig geschützt werden muss. Die dem Glas zugewandte Seite ist dabei unkritisch, da das schmelzflüssige Glas selber das Molybdän vor Oxidation schützt.

Eine Möglichkeit ist der Einsatz von Inertgas, wie es z. B. in der DD-149 501 A beschrieben wird. Dabei werden die kritischen Stellen eines Mo-Bauteils mit einem geeigneten Gas, z. B. Stickstoff umspült. Dies ist eine sehr aufwendige und kostenintensive Lösung.

Eine weitere Möglichkeit wurde von M. Dunkl, A. Fantinel, G. Dinelli und R. Togon vorgeschlagen. Dabei wird schmelzgegossenes AZS-Material in Verbindung mit Molybdänblechen eingesetzt, wobei unter AZS Al₂O₃ • ZrO₂ • SiO₂ verstanden wird. AZS wird üblicherweise in Glasschmelzwannen als Glaskontaktmaterial eingesetzt.

Durch das Einbetten des Molybdänbleches in das schmelzgegossene AZS-Material wird eine Oxidation des Molybdänbleches im Einsatz weitgehend verhindert. Das Molybdänblech befindet sich somit unter Luftabschluss und kann problemlos auf die Einsatztemperatur getempert und als Wannenauskleidung eingebaut werden. Erst wenn die Glasschmelze mit der Wannenauskleidung in Kontakt kommt, wird die AZS-Schicht abgetragen und das Molybdän steht in direktem Kontakt zur Glasschmelze, so dass die positiven Eigenschaften des Molybdäns genutzt werden können. Das Molybdänblech befindet sich dann nach wie vor durch die Glasschmelze unter Luftabschluss, so dass keine Oxidationen auftreten können. Das Eindringen von Sauerstoff wird auch dadurch verhindert, dass das AZS-Material keine offenen durchgehenden Poren aufweist, durch die Sauerstoff rückseitig an das Molybdänblech gelangen könnte.

Nachteilig bei diesem Verbundmaterial ist allerdings, dass das AZS-Material zunächst abgetragen werden muss und somit in die Glasschmelze gelangt, was zu Glasfehlem führen kann. Dieser Nachteil kann dadurch behoben werden, dass in kritischen Wannenbereichen die schmelzgegossenen Steine glasseitig mit Molybdänblechen verkleidet werden, z.B. an Durchflüssen. Glasseitig werden die Bleche mit einer Oxidationsschutzschicht versehen, z. B. Sibor® der Fa. Plansee, welche ausreicht, das Mo während des Tempervorgangs vor Oxidation zu schützen. Nachteil dieser Variante ist allerdings, dass auch hier hochwertige schmelzgegossene Steine benötigt werden, welche das Molybdän vor dem rückseitigen Luft- bzw. Sauerstoffzutritt schützen müssen.

Schmelzgegossene Werkstoffe (in der Glasindustrie werden hauptsächlich AZS-Steine, hochzirkonoxidhaltige Steine (= HZFC) und Aluminasteine eingesetzt) weisen verschiedene Nachteile auf:
- schlechte Temperaturwechselbeständigkeit, dies gilt insbesondere für AZS und HZFC im Temperaturbereich zwischen 1000°C und 1200°C, und dadurch problematisch bei häufigen Abtempem und starken Temperaturwechseln während des Betriebes,
- hohe Härte und dadurch schwierige und aufwendige Bearbeitung,
- hohe Kosten durch teure Ausgangsrohstoffe,
- aufwendige Herstellung durch hohe Schmelztemperatur und langwierige Abkühlung.

Aufgabe der Erfindung ist es daher, ein kostengünstigeres Verbundmaterial zur Verfügung zu stellen, das bezüglich der Korrosionsbeständigkeit mit den bekannten Verbundmaterialien vergleichbar ist und das einen effektiven, rückseitigen Oxidationsschutz für das Molybolän gewährleistet.

Diese Aufgabe wird mit einem Verbundmaterial gelöst, bei dem die Feuerfest-Schicht aus einem kohlenstoffhaltigen, oxid-keramischen Material mit mindestens einem Antioxidanzmittel, das während des Einsatzes eine Gefügeverdichtung der Feuerfestschicht bewirkt und eindringenden Sauerstoff vollständig abbindet, besteht und auf die Molibdänschicht aufgebrannt oder aufgesintert ist.

Als Komponenten für oxid-keramische Materialien kommen vorzugsweise Al₂O₃, MgO • Al₂O₃(Spinell), 3Al₂O₃ • 2SiO₂ (Mullit), ZrO₂ oder MgO oder Mischungen daraus in Frage. Durch den zugrunde liegenden Herstellungsweg, d. h. Formgebung und anschließendes Sintern bzw. Verkoken, ist dieses Material deutlich günstiger als die schmelzgegossenen Werkstoffe. Auch die Abkühlzeiten für diese Verbundmaterialien sind deutlich geringer.

Der Kohlenstoff wird den oxid-keramischen Komponenten in Form von verkokenden Bindemitteln, vorzugsweise in Form von Steinkohlenteerpech oder Kunstharz, insbesondere als Phenolharz zugegeben. Durch Pyrolyse und Abspaltung flüchtiger Komponenten bildet sich während des Herstellungsprozesses des Verbundmaterials bei 300-600°C der elementare Kohlenstoff. Zusätzlich kann dem Versatz, d.h. der Mischung, - um den Kohlenstoffgehalt zu erhöhen - auch elementarer Kohlenstoff z.B. in Form von Flockengraphit zugegeben werden. Vorteilhaft ist die hohe Oxidationsfähigkeit der Kohlenstoffe, weil dadurch der für das Molybdän schädliche Sauerstoff gebunden wird, sowie deren gute Wärmeleitfähigkeit. Je nach Art des zugegebenen Kohlenstoffs schwankt die Temperatur, bei der die Oxidation des Kohlenstoffs stattfindet, und liegt z.B. bei Kunstharz bereits bei 400°C. Diese Temperatur liegt in etwa bei der Temperatur, bei der das Molybdän oxidiert.

Um die positiven Eigenschaften über einen möglichst langen Einsatzzeitraum zu erhalten, wird dem kohlenstoffhaltigen oxidkeramischen Material mindestens ein Antioxidanzmiftel zugesetzt. Dieses Antioxidanzmittel bewirkt während des Einsatzes eine Gefügeverdichtung der Feuerfest-Schicht und bindet eindringenden Sauerstoff vollständig ab, schützt also seinerseits den Kohlenstoff.

Es hat sich herausgestellt, dass durch die Zugabe eines Antioxidanzmittels die Oxidation des Kohlenstoffs dahingehend kontrolliert werden kann, dass während des Einsatzes nicht der gesamte Kohlenstoffanteil oxidiert wird, so dass dieser wegen der vorteilhaften Wärmeleiteigenschaften und mechanischen Eigenschaften (Gefügeflexibilität) noch in ausreichendem Maße in der Feuerfest-Schicht vorhanden ist.

Unter diesem Aspekt hat es sich als vorteilhaft herausgestellt, dass der Anteil des Kohlenstoffes in einer größeren Menge (in Gew.-%) vorliegen sollte als der des Antioxidanzmittels.

Die Antioxidanzmittel bestehen vorzugsweise aus Al, B₄C, ZrB₂,Mg, Si, Al₄C₃, CaB₆, TiB₂, B, 3MgO • B₂O₃ und/oder Mischungen daraus.

Der Einfluss von Antioxidanzmittel im Zusammenhang mit kohlenstoffhaltigen, feuerfesten Erzeugnissen wird zwar in S. Postrach "Einfluss von Antioxidanzmittel auf die Eigenschaften von kohlenstoffhaltigen Feuerfesterzeugnissen" in Keramische Zeitschrift 48 [9] 1996, S. 784 - 791 beschrieben. Für die Verwendung von kohlenstoffhaltigen, oxid-keramischen Materialien mit Antioxidanzmitteln in Kombination mit Molybdän für Glaskontaktanwendungen gibt es allerdings keine Hinweise.

Aufgrund der zuvor genannten Eigenschaften sind kohlenstoffhaltige keramische Werkstoffe mit Antioxidanzmittel geeignet, Molybdän vor schädlicher Oxidation zu schützen.

Durch die Kombination von Molybdänblechen mit kohlenstoffhaltigem, oxid-keramischem Material ergibt sich ein neuartiger Verbundwerkstoff, welcher deutlich günstiger hergestellt werden kann als armierte bzw. mit Blechen belegte schmelzgegossene Steine.

Das Verbundmaterial weist vorzugsweise 3 - 30 Gew.-% Kohlenstoff, 1 - 10 Gew.-% Antioxidanzmittel und Rest oxid-keramisches Material auf, wobei der Kohlenstoffanteil jeweils um mindestens 2 Gew.-% höher liegt als der Anteil des Antioxidanzmittels. Besonders bevorzugt sind Kohlenstoffanteile von 3 bis 15 Gew.% und Antioxidanzanteile von 1 bis 5 Gew.%. Vorzugsweise liegt der Kohlenstoffanteil um 2 Gew.-% bis 10 Gew.-% über dem des Antioxidanzmittels.

Bei diesen Gew.-%-Angaben bleibt der Anteil des Bindemittels mit Ausnahme des Rest-Kohlenstoff-Anteils außer Betracht. Dies bedeutet, dass sich der Kohlenstoff-Anteil, der im Bindemittel enthalten ist und gegebenenfalls in elementarer Form zugegeben wird, der Anteil des Antioxidanzmittels und der des oxid-keramischen Materials auf 100 Gew.-% addieren.

Um die Molybdänschicht zusätzlich vor Oxidationserscheinungen zu schützen, ist es von Vorteil, wenn die Molybdänschicht mindestens einseitig, vorzugsweise beidseitig mit einer Schutzschicht überzogen ist. Diese Schutzschicht, die vorzugsweise an den freiliegenden Molybdänflächen aufgebracht wird, kann beispielsweise aus SiO₂• B₂O₃ (Sibor®) bestehen.

Das Verfahren zur Herstellung solcher Verbundmaterialien ist durch folgende Verfahrensschritte gekennzeichnet:
- Herstellen eines keramischen Versatzes mit mindestens einem Antioxidanzmittel und Mischen mit mindestens einem, insbesondere organischen, Bindemittel,
- Einbringen der Mischung in eine Form, in der das Molybdänblech angeordnet ist,
- Unterwerfen der Mischung zusammen mit dem Molybdänblech einer keramischen Formgebung zur Herstellung des Grünlings,
- Brennen oder Verkoken des Grünlings bei Temperaturen bis 1600°C unter reduzierender Atmosphäre oder unter Luftabschluss,
- Abkühlen des Verbundmaterials unter reduzierender Atmosphäre oder unter Luftabschluss.

Das Formgebungsverfahren dieser Werkstoffe hängt von der Geometrie ab. Bei großen Längen-Durchmesser-Verhältnissen bietet sich das isostatische Pressen an, bei normalen Verhältnissen werden zweiseitig verdichtende mechanische Pressverfahren verwendet. Komplizierter aufgebaute Formbauteile können mittels Handformgebungsverfahren, unter Verwendung von Stampf- oder Gießmassen, hergestellt werden.

Z.B. kann ein Molybdän-Zylinder den bei der isostatischen Formgebung üblicherweise verwendeten Metallkem ersetzen. Bei diesem Beispiel wird zunächst der Molybdän-Zylinder in eine elastische Form eingebracht, anschließend wird dann der Raum zwischen der Form und dem Molybdän-Zylinder mit der vorbereiteten Masse aufgefüllt. Anschließend wird die dicht verschlossene Form der isostatischen Formgebung zugeführt.

Vorzugsweise wird das Molybdänblech vor dem Einbringen in die Form mindestens einseitig und zwar vorteilhafterweise auf der der späteren Glasschmelze zugewandeten Fläche mit einer Schutzschicht versehen.

Vorzugsweise werden die Antioxidanzmittel in einer Menge von 1 - 5 Gew.-% dem keramischen Material zugegeben.

Da die Partikelgröße der eingesetzten Materialien einen Einfluss auf die Porengröße hat, werden sowohl für die keramischen Materialien als auch für die Antioxidanzmittel Partikelgrößen von 1 - 100 µm bevorzugt.

Vorzugsweise werden sowohl für die keramischen Materialien als auch für die kohlenstoffhaltigen Bindemittel Antioxidanzmittel solche mit Partikelgrößen im Bereich von 1 - 100 µm, insbesondere im Bereich von 30 bis 90 µm verwendet.

Vorzugsweise wird das oxid-keramische Material als Partikel mit Partikelgrößen bis 5 mm verwendet.

Um eine möglichst geringe offene Porosität zu erreichen, wird der oxid-keramische Anteil mit einer entsprechenden Komverteilung hergestellt.

Eine bevorzugte Mischung weist folgende Verteilung auf:

| | | | |
|---|---|---|---|
| Korngröße | 1-4 mm | 0,1 bis < 1 mm | 0 bis < 0,1 mm |
| Anteil in Gew.% | 0-50 | 25-50 | 25-50 |

Dies gilt für alle genannten oxid-keramischen Materialien.

Zusätzlich können Kohlenstoffträger, z.B. Flockengraphit zugegeben werden. Die Teilchengröße beträgt idealerweise 0,3-0,5 mm.

Die Brenndauer liegt vorzugsweise bei 2 - 12 h. Über die Brenndauer kann die Porengröße und auch der Grad der Offen- bzw. Geschlossenporigkeit eingestellt werden. Besonders bevorzugte Brenndauern liegen bei 2 - 4 h.

Die Abkühlung erfolgt im vorzugsweise ausgeschalteten Ofen.

Die Abkühldauer liegt bei max. 2 Tagen.

Vorzugsweise wird das Molybdänblech vor dem Einbringen in die Form mindestens einseitig mit einer Schutzschicht versehen.

Vorzugsweise wird die Schutzschicht durch Flammspritzen oder Plasmaspritzen aufgetragen.

Vorzugsweise wird die dem Feuerfest-Material zugewandte Seite des Molybdänbleches mit einer Schicht zur Verbesserung der Haftung versehen.

Das Verbundmaterial wird vorzugsweise für Glaskontaktanwendungen verwendet, wobei die Molybdänschicht mit einer Glasschmelze in Kontakt steht und die feuerfeste Schicht auf der Rückseite der Molybdänschicht angeordnet ist.

Eine bevorzugte Verwendung ist die für Schmelzwannenauskleidungen oder für Durchflussrohre für Glasschmelzen.

Eine beispielhafte Ausführungsform der Erfindung wird nachfolgend anhand der Zeichnungen näher erläutert.

Es zeigen:
- Figur 1: eine perspektivische Darstellung eines für eine Wannenauskleidung vorgesehenen Blockes in perspektivischer Darstellung und
- Figur 2: eine vergrößerte Darstellung der Einzelheit X.

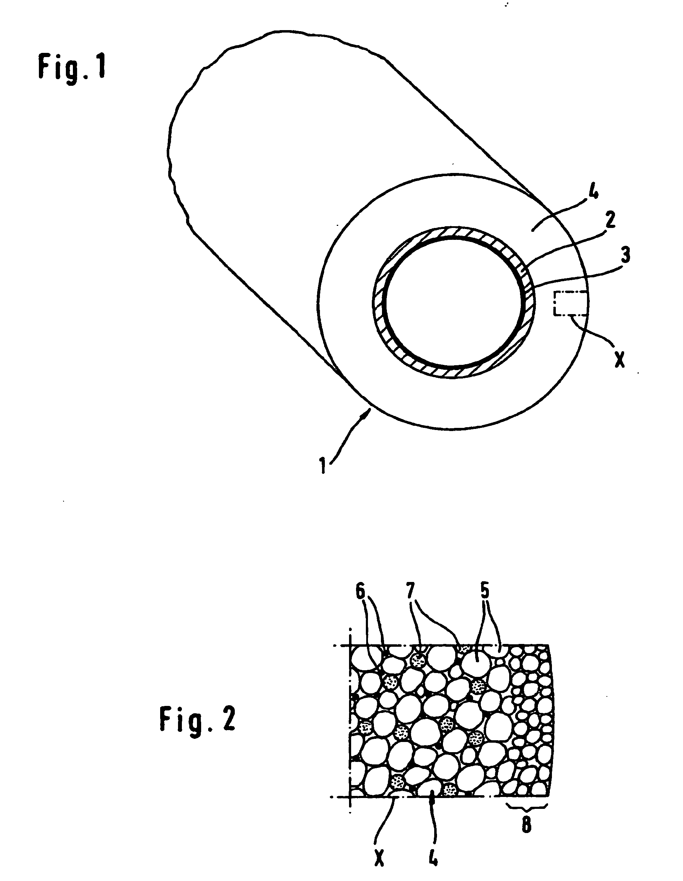

In der Figur 1 ist ein Durchflussrohr 1 aus dem erfindungsgemäßen Verbundmaterial dargestellt, das ein Molybdänblech 2, welches zu einem Zylinder verarbeitet wurde, umfasst. Auf dessen Rückseite ist eine Feuerfest-Schicht 4 aus einem kohlenstoffhaltigen oxidkeramischen Material 5 z.B. aus Al₂O₃-C angeordnet. Zwischen dem keramischen Material 5, das bis zu 10% Antioxidanzmittel 6 enthält, und dem Molybdänblech 2 kann zusätzlich noch eine Bindungsschicht (nicht dargestellt) vorgesehen sein, damit beim Herstellungsbrand eine innige Verbindung zwischen dem keramischen Material und dem Molybdänblech erfolgt. An der Innenfläche des Molybdänblechs 2, die mit dem Glas in Kontakt kommt, ist eine Schutzschicht 3 aufgebracht, die auch die Stirnflächen des Bleches 2 abdeckt. Diese Schutzschicht kann aus Sibor® bestehen.

In der Figur 2 ist eine schematische vergrößerte Darstellung des Ausschnittes X des Feuerfest-Materials 4 zu sehen, welche die Verhältnisse während des Einsatzes deutlich macht. Die Außenschicht 8 ist aufgrund der Reaktionen der Antioxidanzmittel 6 mit der umgebenden sauerstoffhaltigen Atmosphäre verdichtet. Je nach Kombination kann es auch zu Reaktionen zwischen den Reaktionsprodukten der Antioxidanzmittel 6, wobei sich z.B. Boroxid bildet, mit den oxid-keramischen Komponenten 5 kommen. In dieser Zone ist der Kohlenstoff weitgehend verschwunden, wurde also zu CO bzw. CO₂ umgesetzt. Diese Reaktionen führen dazu, dass das Originalgefüge im Inneren des Bauteils erhalten bleibt und das Molybdän nicht oxidiert wird.

Die Menge der zugegebenen Antioxidanzmittel hängt einerseits von den gewählten keramischen Materialien ab und andererseits auch von den gewünschten Eigenschaften. Wird eine möglichst lange Haltbarkeit über mehrere Jahre angestrebt, ist eine lange Brenndauer bei hohen Temperaturen vorgesehen. In diesem Fall sind niedrige Kohlenstoff- und Antioxidanzgehalte vorgesehen. Steht hingegen die Forderung nach vielen Auf- und Abheizzyklen im Vordergrund, wird der Kohlenstoff- und Antioxidanzmittelgehalt hoch sowie die Brenntemperatur möglichst gering gehalten.

Die folgende Tabelle zeigt die chemische Zusammensetzung typischer Versätze in Gew.-%:

| | Al₂O₃ | SiO₂ | ZrO₂ | MgO | C | Antioxidanzmittel |
|---|---|---|---|---|---|---|
| Alumina-Graphit (Al₂O₃-C) | 40-60 | 10-20 | - | - | 5-30 | 4 |
| Zirkonoxid-Graphit (ZrO₂-C) | - | 5-15 | 60-80 | - | 5-20 | 5 |
| Magnesia-Graphit (MgO-C) | - | 5-15 | 50-70 | 50-70 | 5-15 | 3 |
| MgO-Al₂O₃- Spinell-Graphit | 0-40 | 5-15 | - | MgO-Al₂O₃ 40-60 | 5-30 | 4 |

Der Kohlenstoffanteil bezieht sich auf den z.B. aus dem Kunstharz stammenden C-Anteil sowie auf den durch die Zugabe von z.B. Flockengraphit gebildeten Anteil.

Die Menge der zugegebenen Antioxidanzmittel hängt einerseits von dem gewählten oxid-keramischen Material ab und andererseits auch von der Einsatztemperatur. Bei niedrigen Einsatztemperaturen (bis 1100°C) werden vorzugsweise Antioxidanzmittel eingesetzt, welche Boratphasen bilden bzw. enthalten, z.B. ZrB₂, CaB₆. Für Temperaturen >1100°C sind die metallischen Antioxidanzmittel Al und Si geeignet, da sie für die Bildung der Carbide Al₄C₃ und SiC verantwortlich sind.

### Bezugszeichen

- 1: Durchflussrohr
- 2: Molybdänblech
- 3: Schutzschicht
- 4: Feuerfest-Schicht
- 5: oxid-keramische Komponente
- 6: Antioxidanzmittel
- 7: Graphit
- 8: Außenschicht

## Patentansprüche

1. Verbundmaterial für Glaskontaktanwendungen mit einer Molybdänschicht und einer Feuerfestschicht, **dadurch gekennzeichnet,**
**dass** die Feuerfest-Schicht (4) aus einem kohlenstoffhaltigen, oxid-keramischen Material (5) mit Antioxidanzmittel (6), das während des Einsatzes eine Gefügeverdichtung der Feuerfest-Schicht bewirkt und eindringenden Sauerstoff vollständig abbindet, besteht und auf die Molybdänschicht (2) aufgebrannt oder aufgesintert ist.

2. Verbundmaterial nach Anspruch 1, **dadurch gekennzeichnet, dass** das oxid-keramische Material (5) Al₂O₃, MgO • Al₂O₃, 3Al₂O₃ • 2SiO₂, ZrO₂ oder MgO oder Mischungen daraus aufweist.

3. Verbundmaterial nach Anspruch 1 oder 2, **dadurch gekennzeichnet, dass** das Antioxidanzmittel aus Al, B₄C, ZrB₂, Mg, Si, Al₄C₃, CaB₆, TiB₂, B, 3MgO • B₂O₃ und/oder Mischungen daraus besteht.

4. Verbundmaterial nach einem der Ansprüche 1 bis 3, **gekennzeichnet durch** 3 - 30 Gew.-% Kohlenstoff, 1 - 10 Gew.-% Antioxidanzmittel und Rest oxid-keramisches Material, wobei der Kohlenstoffanteil mindestens 2 Gew.-% höher liegt als der Anteil des Antioxidanzmittels.

5. Verbundmaterial nach Anspruch 4, **gekennzeichnet durch** 3 bis 15 Gew.-% Kohlenstoff, 1 bis 5 Gew.-% Antioxidanzmittel und Rest oxid-keramisches Material.

6. Verbundmaterial nach einem der Ansprüche 4 oder 5, **dadurch gekennzeichnet, dass** der Kohlenstoffanteil um 2 Gew.-% bis 10 Gew.-% über dem des Antioxidanzmittels liegt.

7. Verbundmaterial nach einem der Ansprüche 1 bis 6, **dadurch gekennzeichnet, dass** die Molybdänschicht (2) mindestens einseitig mit einer Schutzschicht (3) überzogen ist.

8. Verbundmaterial nach Anspruch 7, **dadurch gekennzeichnet, dass** die Schutzschicht (3) aus SiO₂•B₂O₃ (Sibor®) besteht.

9. Verfahren zur Herstellung eines Verbundmaterials für Glaskontaktanwendungen mit einer Molybdänschicht und einer Feuerfestschicht, **gekennzeichnet durch** folgende Verfahrensschritte:
- Herstellung eines keramischen Versatzes mit mindestens einem Antioxidanzmittel, das während des Einsatzes eine Gefügeverdichtung der Feuerfest-Schicht bewirkt und eindringenden Sauerstoff volständig abbindet, und Mischen mit mindestens einem kohlenstoffhaltigen Bindemittel,
- Einbringen der Mischung in eine Form, in der ein Molybdänblech angeordnet ist,
- Unterwerfen der Mischung zusammen mit dem Molybdänblech einer Formgebung zur Herstellung eines Grünlings,
- Brennen oder Verkoken des Grünlings bei Temperaturen bis 1600°C unter reduzierender Atmosphäre oder unter Luftabschluss,
- Abkühlen des Verbundmaterials unter reduzierender Atmosphäre oder Luftabschluss.

10. Verfahren nach Anspruch 9, **dadurch gekennzeichnet, dass** 1 bis 10 Gew.-% Antioxidanzmittel zugegeben werden.

11. Verfahren nach Anspruch 9 oder 10, **dadurch gekennzeichnet, dass** das kohlenstoffhaltige Bindemittel und das Antioxidanzmittel als Pulver mit Partikelgrößen von 1 bis 100 µm zugegeben werden.

12. Verfahren nach Anspruch 11, **dadurch gekennzeichnet, dass** Pulver mit Partikelgrößen von 30 bis 90 µm zugegeben wird.

13. Verfahren nach einem Ansprüche 9 bis 12, **dadurch gekennzeichnet, dass** das Brennen innerhalb einer Zeit von 2h bis 10 h durchgeführt wird.

14. Verfahren nach einem der Ansprüche 9 bis 13, **dadurch gekennzeichnet, dass** als kohlenstoffhaltiges Bindemittel ein verkokendes Bindemittel zugegeben wird.

15. Verfahren nach Anspruch 14, **dadurch gekennzeichnet, dass** als verkokendes Bindemittel Steinkohlenteerpech oder ein Kunstharz zugegeben wird.

16. Verfahren nach Anspruch 15, **dadurch gekennzeichnet, dass** als Kunstharz Phenolharz zugegeben wird.

17. Verfahren nach einem der Ansprüche 9 bis 16, **dadurch gekennzeichnet, dass** das oxid-keramische Material als Partikel mit Komgrößen bis 5 mm zugegeben wird.

18. Verfahren nach einem der Ansprüche 9 bis 17, **dadurch gekennzeichnet, dass** vom oxid-keramischen Material eine Mischung mit folgenden Korngrößenfraktionen hergestellt wird:
| | |
|---|---|
| Korngröße 1 - 4 mm, | Anteil 0 - 50 Gew.-% |
| Korngröße 0,1 bis < 1 mm, | Anteil 25 - 50 Gew.-% |
| Korngröße 0 bis < 0,1 mm, | Anteil 25 - 50 Gew.-% |
bezogen auf das gesamte oxid-keramische Material.

19. Verfahren nach einem der Ansprüche 9 bis 18, **dadurch gekennzeichnet, dass** das Molybdänblech vor dem Einbringen in die Form mindestens einseitig mit einer Schutzschicht versehen wird.

20. Verfahren nach Anspruch 19, **dadurch gekennzeichnet, dass** die Schutzschicht durch Flammspitzen oder Plasmaspritzen aufgetragen wird.

21. Verfahren nach einem der Ansprüche 9 bis 20, **dadurch gekennzeichnet, dass** die dem Feuerfest-Material zugewandte Seite des Molybdänblechs mit einer Schicht zur Verbesserung der Haftung versehen ist.

22. Verwendung des Verbundmaterials mit einer Molybdänschicht (2) und einer Feuerfestschicht für Glaskontaktanwendungen, bei dem die eine Seite der Molybdänschicht (2) mit einer Glasschmelze in Kontakt steht und die andere Seite der Molybdänschicht eine aufgebrachte oder aufgesinterte Feuerfestschicht, das während des Einsatzes eine Gefügeverdichtung der Feuerfest-Schicht bewirkt und eindringenden Sauerstoff vollständig abbindet, aus einem oxidkeramischen Material (5) mit Antioxidanzmittel (6) angeordnet ist.

23. Verwendung nach Anspruch 22 für Schmelzwannenauskleidungen oder für Durchflussrohre für Glasschmelzen.

## Claims

1. Composite material for glass contact applications, having a molybdenum layer and a refractory layer, **characterized in that** the refractory layer (4) consists of a carbon-containing, oxide-ceramic material (5) with antioxidant (6), which during use compacts the microstructure of the refractory layer and completely bonds penetrating oxygen, and is fired or sintered onto the molybdenum layer (2).

2. Composite material according to Claim 1, **characterized in that** the oxide-ceramic material (5) includes Al₂O₃, MgO • Al₂O₃, 3Al₂O₃ • 2SiO₂, ZrO₂ or MgO or mixtures thereof.

3. Composite material according to Claim 1 or 2, **characterized in that** the antioxidant consists of Al, B₄C, ZrB₂, Mg, Si, Al₄C₃, CaB₆, TiB₂, B, 3MgO • B₂O₃ and/or mixtures thereof.

4. Composite material according to one of Claims 1 to 3, **characterized by** 3 - 30% by weight of carbon, 1 - 10% by weight of antioxidant, remainder oxide-ceramic material, the carbon content being at least 2% by weight higher than the antioxidant content.

5. Composite material according to Claim 4, **characterized by** 3 to 15% by weight of carbon, 1 to 5% by weight of antioxidant, remainder oxide-ceramic material.

6. Composite material according to one of Claims 4 or 5, **characterized in that** the carbon content is 2% by weight to 10% by weight higher than the antioxidant content.

7. Composite material according to one of Claims 1 to 6, **characterized in that** the molybdenum layer (2) is coated with a protective layer (3) on at least one side.

8. Composite material according to Claim 7, **characterized in that** the protective layer (3) consists of SiO₂•B₂O₃ (Sibor®).

9. Process for producing a composite material for glass contact applications having a molybdenum layer and a refractory layer, **characterized by** the following process steps:
- production of a ceramic batch containing at least one antioxidant which during use compacts the microstructure of the refractory layer and completely bonds penetrating oxygen, and mixing it with at least one carbon-containing binder,
- introducing the mixture into a mould in which a molybdenum sheet is arranged,
- subjecting the mixture together with the molybdenum sheet to shaping to produce a green product,
- firing or carbonizing the green product at temperatures of up to 1600°C under a reducing atmosphere or under the exclusion of air,
- cooling the composite material under a reducing atmosphere or under the exclusion of air.

10. Process according to Claim 9, **characterized in that** from 1 to 10% by weight of antioxidant is added.

11. Process according to Claim 9 or 10, **characterized in that** the carbon-containing binder and the antioxidant are added as powder with particle sizes of from 1 to 100 µm.

12. Process according to Claim 11, **characterized in that** powder with particle sizes of from 30 to 90 µm is added.

13. Process according to one of Claims 9 to 12, **characterized in that** the firing is carried out over a period of from 2h to 10h.

14. Process according to one of Claims 9 to 13, **characterized in that** the carbon-containing binder added is a carbonizing binder.

15. Process according to Claim 14, **characterized in that** the carbonizing binder added is coal tar pitch or a synthetic resin.

16. Process according to Claim 15, **characterized in that** the synthetic resin added is phenolic resin.

17. Process according to one of Claims 9 to 16, **characterized in that** the oxide-ceramic material is added as particles with grain sizes of up to 5 mm.

18. Process according to one of Claims 9 to 17, **characterized in that** a mixture with the following grain size fractions is produced from the oxide-ceramic material:
| | |
|---|---|
| Grain size 1 - 4 mm, | Proportion 0 - 50% by weight |
| Grain size 0.1 to <1 mm, | Proportion 25 - 50% by weight |
| Grain size 0 to <0.1 mm, | Proportion 25 - 50% by weight |
based on the total oxide-ceramic material.

19. Process according to one of Claims 9 to 18, **characterized in that** the molybdenum sheet is provided with a protective layer on at least one side before it is introduced into the mould.

20. Process according to Claim 19, **characterized in that** the protective layer is applied by flame spraying or plasma spraying.

21. Process according to one of Claims 9 to 20, **characterized in that that** side of the molybdenum sheet which faces the refractory material is provided with a layer for improving the bonding.

22. Use of the composite material with a molybdenum layer (2) and a refractory layer for glass contact applications, in which one side of the molybdenum layer (2) is in contact with a glass melt and the other side of the molybdenum layer has an applied or sintered-on refractory layer, which during use compacts the microstructure of the refractory layer and completely bonds penetrating oxygen, comprising an oxide-ceramic material (5) with antioxidant (6).

23. Use according to Claim 22 for melting tank linings or for tubes for glass melts to flow through.

## Revendications

1. Matériau composite doté d'une couche de molybdène et d'une couche réfractaire et destiné à des applications en contact avec du verre, **caractérisé en ce que** :
la couche réfractaire (4) est constituée d'un matériau (5) de céramique d'oxyde qui contient du carbone et dotée d'un agent antioxydant (6) qui a pour effet de compacter le réseau de la couche réfractaire en utilisation et qui lie complètement l'oxygène qui y pénètre, et est cuite ou frittée sur la couche de molybdène (2).

2. Matériau composite selon la revendication 1, **caractérisé en ce que** le matériau (5) de céramique d'oxyde présente de l'Al₂O₃, du MgO · Al₂O₃, du 3Al₂O₃ · 2SiO₂, du ZrO₂ ou du MgO ou encore des mélanges de ceux-ci.

3. Matériau composite selon les revendications 1 ou 2, **caractérisé en ce que** l'agent antioxydant est constitué d'Al, de B₄C, de ZrB₂, de Mg, de Si, d'Al₄C₃, de CaB₆, de TiB₂, de B, de 3MgO · B₂O₃ et/ou de mélanges de ceux-ci.

4. Matériau composite selon les revendications 1 ou 3, **caractérisé par** une composition de 3 à 30 % en poids de carbone, de 1 à 10 % d'agent antioxydant, le solde étant un matériau de céramique d'oxyde, la teneur en carbone étant d'au moins 2 % en poids supérieure à la teneur en agente antioxydant.

5. Matériau composite selon la revendication 4, **caractérisé par** une composition de 3 à 15 % en poids de carbone, de 1 à 5 % en poids d'antioxydant, le reste étant constitué d'un matériau de céramique d'oxyde.

6. Matériau composite selon l'une des revendications 4 ou 5, **caractérisé en ce que** la teneur en carbone est d'au moins 2 % en poids à 10 % en poids supérieure à celle de l'agent antioxydant.

7. Matériau composite selon l'une des revendications 1 à 6, **caractérisé en ce que** la couche de molybdène (2) est recouverte au moins d'un côté d'une couche de protection (3).

8. Matériau composite selon la revendication 7, **caractérisé en ce que** la couche de protection (3) est constituée de SiO₂ · B₂O₃ (Sibor®).

9. Procédé de préparation d'un matériau composite doté d'une couche de molybdène et d'une couche réfractaire pour application en contact avec du verre, **caractérisé par** les étapes qui consistent à :
- préparer une composition céramique qui comprend au moins un agent antioxydant qui a pour effet de compacter le réseau de la couche réfractaire pendant son application et qui lie complètement l'oxygène qui y pénètre, et le mélanger avec au moins un liant qui contient du carbone,
- amener le mélange dans un moule dans lequel une tôle de molybdène a été placée,
- faire subir au mélange et en même temps à la tôle de molybdène un moulage de préparation d'une ébauche crue,
- cuire ou cokéfier l'ébauche crue à des températures qui peuvent atteindre 1 600°C, dans une atmosphère réductrice ou en excluant l'air,
- refroidir le matériau composite dans une atmosphère réductrice ou en excluant l'air.

10. Procédé selon la revendication 9, **caractérisé en ce qu'**on ajoute de 1 à 10 % en poids d'agent antioxydant.

11. Procédé selon les revendications 9 ou 10, **caractérisé en ce que** le liant qui contient du carbone et l'agent antioxydant sont ajoutés sous la forme d'une poudre de particules d'une taille de 1 à 100 µm.

12. Procédé selon la revendication 11, **caractérisé en ce qu'**on ajoute une poudre en particules d'une taille de 30 à 90 µm.

13. Matériau composite selon l'une des revendications 9 à 12, **caractérisé en ce que** la cuisson est réalisée pendant une durée de 2 h à 10 h.

14. Matériau composite selon l'une des revendications 9 à 13, **caractérisé en ce que** l'on ajoute un liant cokéfiable comme liant contenant du carbone.

15. Procédé selon la revendication 14, **caractérisé en ce que** comme liant cokéfiable, on ajoute un brai de charbon ou une résine synthétique.

16. Procédé selon la revendication 15, **caractérisé en ce que** comme résine synthétique, une ajoute une résine de phénol.

17. Procédé selon l'une des revendications 9 à 16, **caractérisé en ce que** le matériau de céramique d'oxyde est ajouté sous la forme de particules d'une taille qui peut atteindre 5 mm.

18. Procédé selon l'une des revendications 9 à 17, **caractérisé en ce qu'**à partir du matériau de céramique d'oxyde, on prépare un mélange qui présente les fractions granulométriques suivantes:
| | |
|---|---|
| grains d'une taille de 1 à 4 mm | proportion de 0 à 50 % en poids |
| grains d'une taille de 0,1 à < 1 mm | proportion de 25 à 50 % en poids |
| grains d'une taille de 0 à < 0,1 mm | proportion de 25 à 50 % en poids |
par rapport à l'ensemble du matériau de céramique d'oxyde.

19. Procédé selon l'une des revendications 9 à 18, **caractérisé en ce que** la tôle de molybdène est dotée sur au moins une face d'une couche de protection avant d'être placée dans le moule.

20. Procédé selon la revendication 19, **caractérisé en ce que** la couche de protection est appliquée par traitement à la flamme ou traitement au plasma.

21. Procédé selon l'une des revendications 9 à 20, **caractérisé en ce que** le côté de la tôle de molybdène tourné vers le matériau réfractaire est doté d'une couche d'amélioration de l'adhérence.

22. Utilisation du matériau composite doté d'une couche de molybdène (2) et d'une couche réfractaire pour des applications en contact avec le verre, dans laquelle un des côtés de la couche de molybdène (2) est en contact avec du verre en fusion, une couche réfractaire constituée d'un matériau de céramique d'oxyde (5) et d'un agent antioxydant (6) étant appliquée ou frittée sur la couche de molybdène et ayant pour effet pendant l'application un compactage du réseau de la couche réfractaire et se liant complètement à l'oxygène qui y pénètre.

23. Utilisation selon la revendication 22 pour des revêtements de cuves de fusion ou de tubes dans lesquels s'écoule du verre en fusion.
